# EUROPÄISCHE PATENTSCHRIFT

(11) **EP 2 745 377 B1**
(45) Veröffentlichungstag und Bekanntmachung des Hinweises auf die Patenterteilung: **08.06.2016**
(21) Anmeldenummer: 12730891.4
(22) Anmeldetag: 21.06.2012
(51) Int. Cl.: B23Q 1/00, H01F 38/18, H04B 5/00

(54) **DREHÜBERTRAGER FÜR WERKZEUGMASCHINEN**
ROTARY TRANSMITTER FOR MACHINE TOOLS
TRANSFORMATEUR TOURNANT POUR MACHINES-OUTILS

(30) Priorität: 16.08.2011 DE 102011080973
(43) Veröffentlichungstag der Anmeldung: 25.06.2014
(60) Teilanmeldung: 14179694.6
(73) Patentinhaber: Komet Group GmbH, 74354 Besigheim (DE)
(72) Erfinder: GRAF, Heiko, 76744 Wörth am Rhein (DE)
(74) Vertreter: Wolf, Eckhard
(86) Internationale Anmeldenummer: PCT/EP2012/061970
(87) Internationale Veröffentlichungsnummer: WO 2013/023823

(56) Entgegenhaltungen:
- EP-B1- 1 856 705

## Beschreibung

Die Erfindung betrifft einen Drehübertrager für Werkzeugmaschinen mit einer induktiven Übertragungsstrecke für elektrische Energie, mit einem maschinenfesten Statorteil und einem werkzeugfesten, um eine Rotationsachse drehbaren Rotorteil, wobei das Statorteil eine in einem Primärstromkreis angeordnete Primärwicklung und das Rotorteil eine in einem Sekundärstromkreis angeordnete, von der Primärwicklung über einen Luftspalt getrennte Sekundärwicklung aufweist.

Drehübertrager dieser Art werden beispielsweise in Werkzeugmaschinen mit Verstellwerkzeugen eingesetzt (EP 1 856 705 B1). Bei dem bekannten Drehübertrager sind je einer statorseitige und eine rotorseitige Energiewicklung für die induktive Energieübertragung nach dem Transformatorprinzip vorgesehen. Die Energiewicklungen sind durch je eine statorseitige und rotorseitige Kernpartie voneinander getrennt, wobei die statorseitigen und rotorseitigen Kernpartien an einander zugewandten Enden über einen Luftspalt einander zugewandt sind. Zusätzlich sind bei dem bekannten Drehübertrager stator- und rotorseitige Sende- und Empfangselemente vorgesehen, die einander paarweise zugeordnete, stator- und rotorseitige Kopplungswindungen für die induktive Datenübertragung aufweisen und die an eine Sende- und Empfangselektronik angeschlossen sind. Eine wesentliche Forderung an diese Drehübertrager besteht darin, dass bei möglichst geringem Bauraum hohe elektrische Leistungen und große Datenmengen übertragen werden können. Außerdem sollen die Systeme robust und einfach in der Handhabung sein, da sie unter rauen Umgebungs- und Einsatzbedingungen zuverlässig arbeiten müssen. Sowohl bei der Herstellung unter Verwendung toleranzbehafteter Bauteile und der teilweise maschinellen Fertigung der Koppelelemente, als auch beim praktischen Einsatz, bei welchem Rotor-, Stator- und Ansteuerelektronik im Reparatur- und Wartungsfall austauschbar sein müssen, ergeben sich Unterschiede in den Komponenten, welche die Eigenschaften sowohl der Energie- als auch der Datenübertragung beeinflussen können. Zudem besteht bei der gebotenen kompakten Bauweise durch die räumliche Nähe von Energie- und Datenübertragungselementen das Problem, dass die Energieübertragung die Datenübertragung stören kann. Trotz vielfältiger konstruktiver Maßnahmen zur Reduzierung dieses Einflusses durch Abschirmung, Symmetrisierung, störungsreduzierte Schaltungstechnik, bedeutet dies, dass der Übertragungsleistung, der Bauraumreduzierung, der Datenrate, der Flexibilität und nicht zuletzt auch den Systemkosten Grenzen gesetzt sind, die den Anwendungsbereich beschränken.

Ausgehend hiervon liegt der Erfindung die Aufgabe zugrunde, die auf der Energieübertragungsstrecke übertragbare Leistung zu vergrößern, ohne dabei die Datenübertragung zu stören.

Zur Lösung dieser Aufgabe werden die in den Patentansprüchen 1, 2 und 6 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von der Erkenntnis aus, dass zur Übertragung der elektrischen Energie vom feststehenden Stator in den sich drehenden Rotor nach dem Transformatorprinzip diese als Wechselstrom bzw. Wechselspannung vorliegen muss. Da sich die Netzversorgung wegen der zu niedrigen Frequenz (50 Hz) und der zu hohen Spannung (230 Volt) nicht direkt zur Übertragung eignet, muss ein geeigneter Wechselstrom im Drehübertrager selbst hergestellt werden. Hierzu wird ein Netzgerät zur Bereitstellung einer Gleichspannung verwendet, die über einen Wechselrichter in eine Wechselspannung mit geeigneter Frequenz konvertiert wird. Auf der Sekundärseite wird die Wechselspannung über einen Gleichrichter und einen Pufferkondensator wieder in Gleichspannung gewandelt. Hinzu kommt, dass die kontaktlose Übertragung von Energie über einen Luftspalt nach dem Transformatorprinzip den Nachteil hat, dass das Kopplungsmaß zwischen Primärwicklung und Sekundärwicklung deutlich kleiner als 1 ist und sich mit der Größe des Luftspalts ändert. Zudem verändern sich die Induktivitäten von Primär- und Sekundärwicklung mit dem Luftspalt. Um eine optimale Leistungsabgabe zu erzielen, muss der Koppler mit einer bestimmten Frequenz in der Nähe der Eigenfrequenz des sekundären Schwingkreises betrieben werden. Da sich diese mit der Luftspaltgröße und aufgrund diverser Bauteiltoleranzen ändert, kann nicht von einer unveränderlichen Eigenfrequenz ausgegangen werden. Die Erfindung sieht deshalb vor, dass die Frequenz bei jedem Systemstart neu bestimmt und vorgegeben wird, damit auch bei geänderten Bedingungen, wie Werkzeugkopfwechsel, Luftspaltabweichung oder Baugruppentausch stets bei einer optimalen Betriebsfrequenz auf der Energieübertragungsstrecke gearbeitet werden kann.

Um dies zu erreichen, wird gemäß der Erfindung eine Verfahrensweise vorgeschlagen, die bei jedem Systemstart folgende Verfahrensschritte umfasst:
- in einem ersten Schritt wird in den Sekundärstromkreis ein Testwiderstand geschaltet,
- in einem zweiten Schritt wird ein Maß für die elektrische Verbrauchsleistung in dem Primärstromkreis oder in dem Sekundärstromkreis in Abhängigkeit von der Wechselstromfrequenz im Primärstromkreis ermittelt,
- in einem dritten Schritt wird eine optimale Wechselstromfrequenz im Primärstromkreis ermittelt, bei welcher die elektrische Verbrauchsleistung maximal ist,
- in einem vierten Schritt wird in dem Primärstromkreis eine Betriebsfrequenz des Wechselstroms für das Übertragen von elektrischer Energie aus dem Statorteil in das Rotorteil eingestellt, deren Wert der optimalen Wechselstromfrequenz entspricht.

In schaltungstechnischer Hinsicht kann die vorstehende Aufgabe dadurch gelöst werden,
a) dass im Primärstromkreis ein Wechselrichter angeordnet ist, dessen Gleichstromeingang an eine Gleichstromquelle angeschlossen ist, dessen Wechselstromausgang an einen die Primärwicklung enthaltenden Primärschwingkreis angeschlossen ist und dessen Betriebsfrequenz über eine Steuerbaugruppe variierbar und einstellbar ist;
b) dass im Sekundärstromkreis ein Gleichrichter angeordnet ist, an dessen Wechselstromeingang ein die Sekundärwicklung enthaltender Sekundärschwingkreis angeschlossen ist und dessen Gleichstromausgang als Verbraucheranschluss ausgebildet ist, wobei der Sekundärstromkreis einen wahlweise zuschaltbaren, den Verbraucheranschluss überbrückenden Testwiderstand umfasst.
c) Bei einer ersten Ausführungsvariante der Erfindung ist außerdem im Primärstromkreis am Gleichstromeingang des Wechselrichters ein Strommesser angeordnet, während die Steuerbaugruppe einen mit einem Frequenzeingang des Wechselrichters verbundenen programmierbaren Stellausgang und einen mit dem Strommesser verbundenen oder kommunizierenden Messeingang aufweist.
c') Bei einer zweiten Ausführungsvariante der Erfindung ist im Sekundärstromkreis ein den Spannungsabfall am Testwiderstand erfassender Spannungsmesser angeordnet, während die Steuerbaugruppe einen mit einem Frequenzeingang des Wechselrichters verbundenen programmierbaren Stellausgang sowie einen mit dem Spannungsmesser drahtlos kommunizierenden Messeingang aufweist.

Um zu dem gewünschten Ziel zu gelangen, weist gemäß einer bevorzugten Ausgestaltung der Erfindung die Steuerbaugruppe eine Auswerteschaltung oder -routine zum Speichern und/oder Auswerten der über den Messeingang in Form von Messsignalen empfangenen Messwerte in Abhängigkeit von den über den Stellausgang in Form von Frequenzsignalen abgegebenen Frequenzwerten bei zugeschaltetem Testwiderstand sowie einen Datenspeicher zur Abspeicherung einer mit der Auswerteschaltung oder -routine berechneten optimalen Betriebsfrequenz auf. Mit anderen Worten bedeutet dies, dass die Steuerbaugruppe die Frequenz des vom Wechselrichter abgegebenen Wechselstroms auf eine nahe bei der Resonanzfrequenz des Sekundärschwingkreises liegende optimale Betriebsfrequenz einstellt.

Im Folgenden wird die Erfindung anhand der in der Zeichnung in schematischer Weise dargestellten Ausführungsbeispiele näher erläutert. Es zeigen
- Fig. 1: eine Seitenansicht eines in eine Maschinenspindel eingespannten Werkzeugkopfs mit Drehübertrager für die Energie- und Datenübertragung in teilweise geschnittener Darstellung;
- Fig. 2: ein Schaltschema des Drehübertragers mit statorseitigem Primärstromkreis und rotorseitigem Sekundärstromkreis;
- Fig. 3: ein Optimierungsdiagramm für die Bestimmung der optimalen Betriebsfrequenz der Energieübertragungsstrecke;

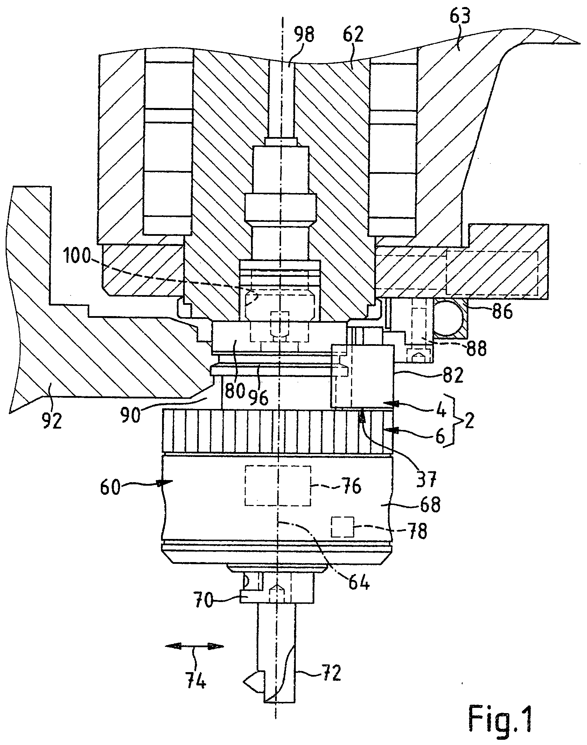

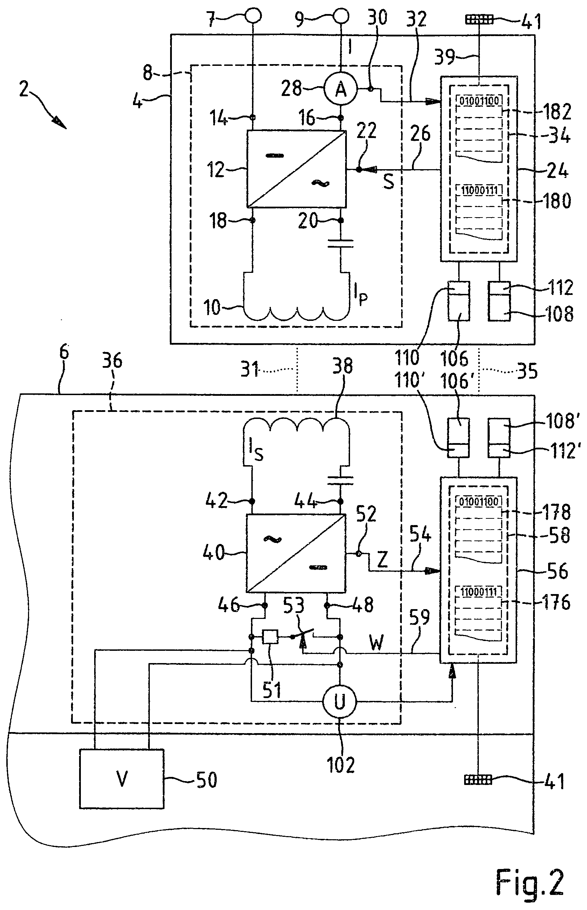

Der in Fig. 2 dargestellte Drehübertrager ist für den Einsatz im Bereich eines austauschbaren Werkzeugkopfs einer Werkzeugmaschine bestimmt, wie er beispielhaft in Fig. 1 dargestellt ist. Der in Fig. 1 gezeigte, als Feindrehkopf ausgebildete Werkzeugkopf 60 besteht im Wesentlichen aus einem Grundkörper 68, einem quer in Richtung des Pfeils 74 zur Rotationsachse 64 des Werkzeugkopfs 60 verstellbaren, ein Schneidwerkzeug 72 aufweisenden Schieber 70, mindestens einem innerhalb des Werkzeugkopfs 60 angeordneten Stromverbraucher 50, beispielsweise in Form einer Messeinrichtung 78 zur direkten Verstellwegmessung und eines elektrischen Verstellmotors 76 für den Schieber 70. Die Stromversorgung des Stromverbrauchers 50 und der Datenaustausch erfolgt über den Drehübertrager 2, der aus einem Statorteil 4 und einem Rotorteil 6 besteht. Der Werkzeugkopf 60 ist mit einem axial über den Grundkörper überstehenden Werkzeugschaft 80 mit der Maschinenspindel 62 einer Werkzeugmaschine 63 kuppelbar. Zur Einstellung eines Luftspalts 37 zwischen dem Statorteil 4 und dem Rotorteil 6 ist das Statorgehäuse 82 an einem statorfesten Halter 86 mittels eines Verstellmechanismus 88 sowohl in seinem Abstand zum Rotor als auch in seiner Drehlage um eine zur Rotationsachse 64 parallele Achse verstellbar angeordnet. Bei dem in Fig. 1 gezeigten Ausführungsbeispiel erstreckt sich das Statorteil 4 segmentartig nur über einen Teilumfang von etwa 60° bis 100° des Werkzeugschafts 80 und lässt den überwiegenden Teil des Schaftumfangs unter Bildung eines Freiraums 90 für den Zugriff eines Werkzeuggreifers 92 für den automatischen Werkzeugwechsel frei. Beim Werkzeugwechsel wird der Werkzeugkopf 60 an der Greiferrille 96 vom Werkzeuggreifer 92 von der dem Statorteil 4 gegenüberliegenden Seite erfasst und bei gelöster Werkzeugkupplung axial gegenüber der Maschinenspindel 62 verschoben. Die Kupplung des Werkzeugkopfes 60 mit der Maschinenspindel 62 erfolgt über eine maschinenseitig über eine Zugstange 98 betätigbaren Spannmechanismus, der von der Maschinenseite aus in den Hohlraum 100 des Werkzeugschafts 80 eingreift und den Werkzeugkopf 60 unter Herstellung einer Planflächenverspannung und einer Radialverspannung mit der Maschinenspindel 62 kuppelt.

Wie aus Fig. 2 zu ersehen ist, weist der Drehübertrager 2 eine induktive Energieübertragungsstrecke 31 auf, die das bereits im Zusammenhang mit Fig. 1 beschriebene maschinenfeste Statorteil 4 und das werkzeugfeste, um eine Rotationsachse 64 drehbare Rotorteil 6 umfasst. Das Statorteil 4 weist eine in einem Primärstromkreis 8 angeordnete Primärwicklung 10 und das Rotorteil 6 eine in einem Sekundärstromkreis 36 angeordnete, von der Primärwicklung 10 über den Luftspalt 37 getrennte Sekundärwicklung 38 auf.

Im Primärstromkreis 8 ist ein Wechselrichter 12 angeordnet, dessen Gleichstromeingang 14, 16 an eine Gleichstromquelle 7, 9 angeschlossen ist und dessen Wechselstromausgang 18, 20 an einen die Primärwicklung 10 enthaltenden Primärschwingkreis angeschlossen ist. Die Betriebsfrequenz des Wechselrichters 12 ist über eine statorseitige Steuerbaugruppe 24 einstellbar. Im rotorseitigen Sekundärstromkreis 36 befindet sich ein Gleichrichter 40, an dessen Wechselstromeingang 42, 44 ein die Sekundärwicklung 38 enthaltender Sekundärschwingkreis angeschlossen ist und dessen Gleichstromausgang 46, 48 als Anschluss für den rotorseitigen Stromverbraucher 50 ausgebildet ist.

Zwischen dem Statorteil 4 und dem Rotorteil 6 befindet sich außerdem eine Datenübertragungsstrecke 35, die jeweils ein Sende- und Empfangselement 106, 108 bzw. 106', 108' für die berührungsfreie bidirektionale Datenübertragung, die jeweils eine Sende- und Empfangselektronik 110, 112 bzw. 110', 112' aufweisen. Die Ansteuerung der Sende- und Empfangselemente erfolgt über die statorseitige Steuerbaugruppe 24 oder die rotorseitige Steuerbaugruppe 56. Die Sende- und Empfangselemente sind zweckmäßig Bestandteile einer induktiven, kapazitiven oder optischen Datenübertragungsstecke.

Die kontaktlose Energieübertragung über den Luftspalt 37 nach dem Transformatorprinzip hat den Nachteil, dass die Kopplung zwischen der statorseitigen Primärwicklung 10 und der rotorseitigen Sekundärwicklung 38 deutlich kleiner als 1 ist und sich mit der Größe des Luftspalts 37 ändert. Auch die Induktivitäten der Primär- und Sekundärwicklung 10, 38 ändern sich mit der Größe des Luftspalts 37. Um eine maximale Leistungsübertragung zu erzielen, müssen der Primärstromkreis 8 und der Sekundärstromkreis 36 mit einer optimalen Frequenz, die etwa der Eigenfrequenz des Sekundärstromkreises entspricht, betrieben werden. Da sich die Eigenfrequenz mit der Luftspaltgröße und den Toleranzen diverser Bauteile in den Stator- und Rotorteilen 4, 6 ändert, bedarf es bei jedem Systemstart einer Anpassung der Betriebsfrequenz.

Zu diesem Zweck weist der Sekundärstromkreis 36 einen wahlweise über den Schalter 53 zuschaltbaren, den Gleichstromausgang 46, 48 im Bereich des Verbraucheranschlusses überbrückenden Testwiderstand 51 auf. Außerdem ist gemäß einer ersten Ausführungsvariante im Primärstromkreis am Gleichstromeingang 14, 16 des Wechselrichters 12 ein Strommesser 28 angeordnet, dessen Ausgang 30 mit einem Messeingang 32 der statorseitigen Steuerbaugruppe 24 kommuniziert. Alternativ hierzu ist gemäß einer zweiten Ausführungsvariante im Sekundärstromkreis ein den Spannungsabfall am Testwiderstand 51 erfassender Spannungsmesser 102 angeordnet, dessen Ausgang beispielsweise über eine Datenübertragungsstrecke 41 mit einem Messeingang 39 der statorseiteigen Steuerbaugruppe 24 kommuniziert.

Bei beiden Ausführungsvarianten weist die statorseitige Steuerbaugruppe 24 einen mit dem Frequenzeingang 22 des Wechselrichters 12 verbundenen programmierbaren Stellausgang 26 auf. Die Steuerbaugruppe 24 weist ihrerseits eine Auswerteschaltung oder -routine zum Speichern und/oder Auswerten der über den Messeingang 32 bzw. 39 in Form von Messsignalen empfangenen Messwerte des Strommessers 28 oder des Spannungsmessers 102 in Abhängigkeit von den über dem Stellausgang 26 in Form von Frequenzsignalen S abgegebenen Frequenzwerten fₚ bei zugeschaltetem Testwiderstand 51 sowie einen Datenspeicher zur Abspeicherung einer mit der Auswerteschaltung oder -routine berechneten optimalen Betriebsfrequenz fₒₚₜ auf. Die Betriebsweise dieser Schaltungsanordnung ist wie folgt:
Nach der Aktivierung des Drehübertragers 2 gibt die statorseitige Steuerbaugruppe 24 dem Wechselrichter 12 für kurze Zeit eine feste Wechselfrequenz vor, welche grob im Bereich der späteren Betriebsfrequenz liegt. Dabei wird Energie von der Statorseite auf die Rotorseite übertragen, mit der die rotorseitige Steuerbaugruppe 56 ihren Betrieb aufnehmen kann. Diese schaltet als erste über den Ausgang 59 und den Schalter 53 den Testwiderstand 51 ein, der die übertragene Energie über den Gleichstromausgang 46, 48 des Gleichrichters 40 aufnimmt und damit den Sekundärschwingkreis für die Eigenfrequenz niedrig impedant macht, ihm also eine gewisse Güte verleiht.

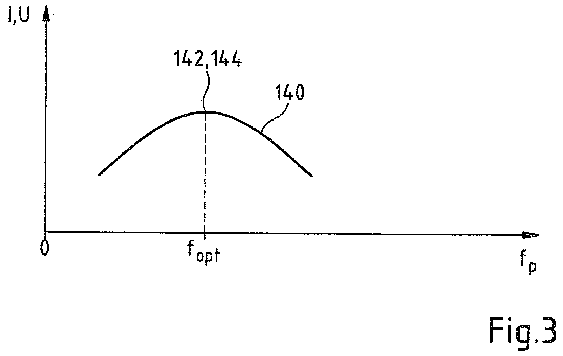

Im Anschluss daran fängt die statorseitige Steuerbaugruppe 24 an, einen vorgegebenen Frequenzbereich schrittweise durchzufahren. Dabei wird bei jedem Frequenzschritt entweder die Stromaufnahme I des Wechselrichters 12 über den Strommesser 28 oder der Spannungsabfall U am Testwiderstand 51 über den Spannungsmesser 102 gemessen und mit den zugehörigen Frequenzwerten fₚ unter Bildung einer Kurve 140 (Fig. 3) abgespeichert. Liegt nun die Eigenfrequenz des rotorseitigen Sekundärschwingkreises innerhalb des durchgefahrenen Frequenzbereichs, so wird man dort entweder ein Strommaximum 142 oder ein Spannungsmaximum 144 feststellen können (vgl. Fig. 3).

Die in der statorseitigen Steuerbaugruppe 24 vorhandene Auswerteschaltung oder -routine bestimmt nun die zum Strommaximum 142 oder Spannungsmaximum 144 gehörende Frequenz, verrechnet diese ggf. noch mit einem Korrekturwert und speichert diese als optimale Betriebsfrequenz fₒₚₜ in einen Datenspeicher für die nachfolgende Ansteuerung des Wechselrichters 12. Danach wird der Testwiderstand 51 über den Schalter 53 abgeschaltet, so dass nun die gesamte übertragbare Leistung dem Stromverbraucher 50 zur Verfügung steht.

Die folgenden Ausführungen dienen lediglich der Erläuterung zusätzlicher in der Zeichnung dargestellter Merkmale, die nicht Gegenstand der vorliegenden Erfindung sind.

Wie vorstehend bereits dargelegt, ist zwischen dem Statorteil 4 und dem Rotorteil 6 des Drehübertragers 2 sowohl eine induktive Energieübertragungsstrecke 31 als auch eine berührungsfreie bidirektionale Datenübertragungsstrecke 35 vorgesehen. Die Wechselspannung für die Energieübertragung wird eigens in dem an eine Gleichstromquelle angeschlossenen Wechselrichter 12 nach Art einer Rechteckspannung hergestellt. Beim Zerhacken der Gleichspannung in die Wechselspannung treten vor allem bei den Nulldurchgängen höherfrequente Störungen auf, die aber schnell abklingen. In zeitlichem Abstand von jedem Nulldurchgang folgt ein längerer Zeitabschnitt bis zum nächsten Nulldurchgang, in welchem keine Störungen vorhanden sind. Andererseits müssen die Daten bei ausreichend hoher Bitrate über die Datenübertragungsstrecke 35 nicht kontinuierlich übertragen werden. Dies kann gemäß der Erfindung dazu benutzt werden, dass die Daten über die bidirektionale Datenübertragungsstrecke 35 in Form von Datenpaketen 180, 182, 176, 178 in Zeitfenstern mit zwischengeschalteten Übertragungspausen übertragen werden. Um eine störungsfreie Übertragung zu gewährleisten, wird zunächst die Information der zeitlichen Lage des Nulldurchgangs des Wechselstroms in der Energieübertragungsstrecke ermittelt. Aufgrund der Information der zeitlichen Lage des Nulldurchgangs des Wechselstroms der Energieübertragungsstrecke werden sodann die Zeitfenster für das Übertragen der Datenpakete 180, 182, 176, 178 so festgelegt, dass sie zwischen zwei aufeinanderfolgenden Nulldurchgängen des Wechselstroms liegen und dass sie jeweils einen von den Nulldurchgängen des Wechselstroms zeitlich beabstandeten Anfangs- und Endpunkt haben.

Schaltungstechnisch wird dies gemäß Fig. 2 dadurch realisiert, dass das statorseitige und das rotorseitige Sendeelement mit je einer Steuerbaugruppe 24, 56 verbunden ist, die jeweils einen Zwischenspeicher 34, 58 enthält, in welchen Datenpakete 180, 182 bzw. 176, 178 für die Absendung über die zugehörigen rotorseitigen oder statorseitigen Sendeelemente 106, 106' in einem definierten Zeitfenster abgelegt sind. Die Datenpakete 180, 182, 176, 178 sind dabei so bemessen, dass die zeitliche Länge des zugehörigen Zeitfensters kleiner ist als die halbe Periode des die Primärwicklung 10 im Primärstromkreis 8 und/oder die Sekundärwicklung 38 im Sekundärstromkreis 36 durchfließenden Wechselstroms und wobei der zeitliche Anfang und das zeitliche Ende des Zeitfensters einen zeitlichen Abstand von den aufeinanderfolgenden Nulldurchgängen des die Primärwicklung 10 bzw. die Sekundärwicklung 38 durchfließenden Wechselstroms aufweisen. Mit dieser Maßnahme wird trotz kompakter Bauweise des Drehübertragers 2 eine durch Umschaltstörungen in der Energieübertragungsstrecke ungestörte Datenübertragung erzielt.

### Bezugszeichenliste

- 2: Drehübertrager
- 4: Statorteil
- 6: Rotorteil
- 7, 9: Gleichstromquelle
- 8: Primärstromkreis
- 10: Primärwicklung
- 12: Wechselrichter
- 14: Schieber
- 14, 16: Gleichstromeingang
- 18, 20: Wechselstromausgang
- 22: Frequenzeingang
- 24: statorseitige Steuerbaugruppe
- 26: Stellausgang
- 28: Strommesser
- 30: Ausgang
- 31: Energieübertragungsstrecke
- 32: Messeingang (I)
- 34: Zwischenspeicher, Datenspeicher
- 35: Datenübertragungsstrecke
- 36: Sekundärstromkreis
- 37: Luftspalt
- 38: Sekundärwicklung
- 39: Messeingang (U)
- 40: Gleichrichter
- 41: Datenübertragungsstrecke
- 42, 44: Wechselstromeingang
- 46, 48: Gleichstromausgang
- 50: Stromverbraucher
- 51: Testwiderstand
- 53: Schalter
- 56: rotorseitige Steuerbaugruppe
- 58: Zwischenspeicher
- 59: Ausgang
- 60: Werkzeugkopf
- 62: Maschinenspindel
- 63: Werkzeugmaschine
- 64: Rotationsachse, Drehachse
- 68: Grund körper
- 70: Schieber
- 72: Schneidwerkzeug
- 74: Pfeil
- 76: elektrischer Verstellmotor
- 78: Messeinrichtung
- 80: Werkzeugschaft
- 82: Statorgehäuse
- 86: statorfester Halter
- 88: Verstellmechanismus
- 90: Freiraum
- 92: Werkzeuggreifer
- 96: Greiferrille
- 98: Zugstange
- 100: Hohlraum
- 102: Spannungsmesser
- 106, 108: Sende- und Empfangselement (statorseitig)
- 106', 108': Sende- und Empfangselement (rotorseitig)
- 110, 112: Sende- und Empfangselektronik (statorseitig)
- 110', 112': Sende- und Empfangselektronik (rotorseitig)
- 140: Kurve
- 142: Strommaximum
- 144: Spannungsmaximum
- 176, 178, 180, 182: Datenpaket
- I: Strom
- U: Spannung
- fₚ: Frequenz
- fₒₚₜ: optimale Betriebsfrequenz

## Patentansprüche

1. Drehübertrager (2) für Werkzeugmaschinen mit einer induktiven Übertragungsstrecke (31) für elektrische Energie, mit einem maschinenfesten Statorteil (4) und einem werkzeugfesten, um eine Rotationsachse (64) drehbaren Rotorteil (6), wobei das Statorteil (4) eine in einem Primärstromkreis (8) angeordnete Primärwicklung (10) und das Rotorteil eine in einem Sekundärstromkreis (36) angeordnete, von der Primärwicklung über einen Luftspalt getrennte Sekundärwicklung (38) aufweist, **dadurch gekennzeichnet, dass** im Primärstromkreis (8) ein Wechselrichter (12) angeordnet ist, dessen Gleichstromeingang (14, 16) an eine Gleichstromquelle (7, 9) angeschlossen ist, dessen Wechselstromausgang (18, 20) an einen die Primärwicklung (10) enthaltenden Primärschwingkreis angeschlossen ist und dessen Betriebsfrequenz über eine Steuerbaugruppe (24) variierbar und einstellbar ist, dass im Sekundärstromkreis (36) ein Gleichrichter (40) angeordnet ist, an dessen Wechselstromeingang (42, 44) ein die Sekundärwicklung (38) enthaltender Sekundärschwingkreis angeschlossen ist, und dessen Gleichstromausgang (46, 48) als Verbraucheranschluss ausgebildet ist, dass der Sekundärstromkreis einen wahlweise zuschaltbaren, den Verbraucheranschluss überbrückenden Testwiderstand (51) umfasst, dass im Primärstromkreis am Gleichstromeingang (14, 16) des Wechselrichters (12) ein Strommesser (28) angeordnet ist, und dass die Steuerbaugruppe (24) einen mit dem Frequenzeingang (22) des Wechselrichters (12) verbundenen programmierbaren Stellausgang (26) und einen mit dem Strommesser (28) verbundenen oder kommunizierenden Messeingang (32) aufweist.

2. Drehübertrager (2) für Werkzeugmaschinen mit einer induktiven Übertragungsstrecke (31) für elektrische Energie, mit einem maschinenfesten Statorteil (4) und einem werkzeugfesten, um eine Rotationsachse (64) drehbaren Rotorteil (6), wobei das Statorteil (4) eine in einem Primärstromkreis (8) angeordnete Primärwicklung (10) und das Rotorteil (6) eine in einem Sekundärstromkreis (36) angeordnete, von der Primärwicklung (10) über einen Luftspalt (37) getrennte Sekundärwicklung (38) aufweist, **dadurch gekennzeichnet, dass** im Primärstromkreis (8) ein Wechselrichter (12) angeordnet ist, dessen Gleichstromeingang (14, 16) an eine Gleichstromquelle (7, 9) angeschlossen ist, dessen Wechselstromausgang (18, 20) an einen die Primärwicklung (10) enthaltenden Primärschwingkreis angeschlossen ist und dessen Betriebsfrequenz über eine Steuerbaugruppe (24) variierbar und einstellbar ist, dass im Sekundärstromkreis (36) ein Gleichrichter (40) angeordnet ist, an dessen Wechselstromeingang (42, 44) ein die Sekundärwicklung (38) enthaltender Sekundärschwingkreis angeschlossen ist, und dessen Gleichstromausgang (46, 48) als Verbraucheranschluss ausgebildet ist, dass der Sekundärstromkreis einen wahlweise zuschaltbaren, den Verbraucheranschluss überbrückenden Testwiderstand (51) umfasst, dass im Sekundärstromkreis ein den Spannungsabfall am Testwiderstand (51) erfassender Spannungsmesser (102) angeordnet ist, und dass die Steuerbaugruppe (24) einen mit dem Frequenzeingang (22) des Wechselrichters (12) verbundenen, programmierbaren Stellausgang (26) sowie einen mit dem Spannungsmesser (102) drahtlos kommunizierenden Messeingang (39) aufweist.

3. Drehübertrager nach Anspruch 1 oder 2, **dadurch gekennzeichnet, dass** die Steuerbaugruppe (24) eine Auswerteschaltung oder -routine zum Speichern und/oder Auswerten der über den Messeingang (32) in Form von Messsignalen empfangenen Messwerte in Abhängigkeit von den über den Stellausgang (26) in Form von Frequenzsignalen abgegebenen Frequenzwerten bei zugeschaltetem Testwiderstand (51) sowie einen Datenspeicher zur Abspeicherung einer mit der Auswerteschaltung oder -routine berechneten optimalen Betriebsfrequenz aufweist.

4. Drehübertrager nach einem der Ansprüche 1 bis 3, **dadurch gekennzeichnet, dass** die Steuerbaugruppe (24) die Frequenz des vom Wechselrichter (12) abgegebenen Wechselstroms auf eine nahe bei der Resonanzfrequenz des Sekundärschwingkreises liegende Betriebsfrequenz einstellt.

5. Werkzeugkopf mit einem elektrischen Verbraucher (50) und mit einem gemäß einem der Ansprüche 1 bis 4 ausgebildeten Drehübertrager (2) **dadurch gekennzeichnet, dass** der elektrische Verbraucher (50) als ein an den Sekundärstromkreis (36) anschließbarer Elektromotor (76) für das Verstellen eines Schiebers (70) und/oder als ein Aktuator für die Schneidenverstellung und/oder als ein Laser und/oder als ein Induktor und/oder als ein elektrisch ansteuerbares Sprühaggregat für ein Abschreckfluid und/oder als eine Vorrichtung zum Schweißen, Löten, Erhitzen, Härten, Beschichten oder Beschriften eines Werkstücks ausgebildet ist.

6. Verfahren für das induktive Übertragen von elektrischer Energie mittels eines Drehübertragers (2) von einem maschinenfesten Statorteil (4) mit einem Primärstromkreis (8) in ein werkzeugfestes Rotorteil (6) mit einem Sekundärstromkreis (36) über eine Energieübertragungsstrecke (31) in einer Werkzeugmaschine, **dadurch gekennzeichnet, dass** in einem ersten Schritt in den Sekundärstromkreis (36) ein Testwiderstand (51) geschaltet wird, dass in einem zweiten Schritt ein Maß für die elektrische Verbrauchsleistung in dem Primärstromkreis (8) oder in dem Sekundärstromkreis (36) in Abhängigkeit von der Frequenz (fₚ) eines Wechselstroms in dem Primärstromkreis (8) ermittelt wird, dass in einem dritten Schritt eine optimale Frequenz (fₒₚₜ) des Wechselstroms in dem Primärstromkreis (8) ermittelt wird, bei welcher die elektrische Verbrauchsleistung maximal ist, und dass in einem vierten Schritt eine Betriebsfrequenz des Wechselstroms in dem Primärstromkreis (8) für das Übertragen von elektrischer Energie aus dem Statorteil (4) in das Rotorteil (6) eingestellt wird, deren Wert der optimalen Frequenz (fₒₚₜ) entspricht.

## Claims

1. A rotary transmitter (2) for machine tools, having an inductive transmission section (31) for electrical power, having a stator part (4), which is fixed to the machine, and a rotor part (6), which is fixed to the tool and can rotate about a rotation axis (64), wherein the stator part (4) has a primary winding (10), which is arranged in a primary circuit (8), and the rotor part has a secondary winding (38), which is arranged in a secondary circuit (36) and is separated from the primary winding by means of an air gap, **characterized in that** an inverter (12) is arranged in the primary circuit (8), the DC input (14, 16) of said inverter being connected to a DC source (7, 9), the AC output (18, 20) of said inverter being connected to a primary resonant circuit which contains the primary winding (10), and it being possible to vary and adjust the operating frequency of said inverter by means of a control assembly (24), **in that** a rectifier (40) is arranged in the secondary circuit (36), a secondary resonant circuit which contains the secondary winding (38) being connected to the AC input (42, 44) of said rectifier, and the DC output (46, 48) of said rectifier being in the form of a load connection, **in that** the secondary circuit comprises a test resistor (51) which can be selectively connected and bridges the load connection, **in that** an ammeter (28) is arranged in the primary circuit at the DC input (14, 16) of the inverter (12), and **in that** the control assembly (24) has a programmable actuating output (26), which is connected to the frequency input (22) of the inverter (12), and a measurement input (32) which is connected to or communicates with the ammeter (28).

2. The rotary transmitter (2) for machine tools, having an inductive transmission section (31) for electrical power, having a stator part (4), which is fixed to the machine, and a rotor part (6), which is fixed to the tool and can rotate about a rotation axis (64), wherein the stator part (4) has a primary winding (10), which is arranged in a primary circuit (8), and the rotor part (6) has a secondary winding (38), which is arranged in a secondary circuit (36) and is separated from the primary winding (10) by means of an air gap (37), **characterized in that** an inverter (12) is arranged in the primary circuit (8), the DC input (14, 16) of said inverter being connected to a DC source (7, 9), the AC output (18, 20) of said inverter being connected to a primary resonant circuit which contains the primary winding (10), and it being possible to vary and adjust the operating frequency of said inverter by means of a control assembly (24), **in that** a rectifier (40) is arranged in the secondary circuit (36), a secondary resonant circuit which contains the secondary winding (38) being connected to the AC input (42, 44) of said rectifier, and the DC output (46, 48) of said rectifier being in the form of a load connection, **in that** the secondary circuit comprises a test resistor (51) which can be selectively connected and bridges the load connection, **in that** a voltmeter (102), which records the voltage drop across the test resistor (51), is arranged in the secondary circuit, and **in that** the control assembly (24) has a programmable actuating output (26), which is connected to the frequency input (22) of the inverter (12), and also a measurement input (39) which communicates wirelessly with the voltmeter (102).

3. The rotary transmitter as claimed in claim 1 or 2, **characterized in that** the control assembly (24) has an evaluation circuit or routine for storing and/or evaluating the measurement values, which are received by means of the measurement input (32) in the form of measurement signals, as a function of the frequency values, which are output by means of the actuating output (26) in the form of frequency signals, when the test resistor (51) is connected, and also has a data memory for storing an optimum operating frequency which is calculated using the evaluation circuit or routine.

4. The rotary transmitter as claimed in one of claims 1 to 3, **characterized in that** the control assembly (24) sets the frequency of the alternating current, which is output by the inverter (12), to an operating frequency which is close to the resonant frequency of the secondary resonant circuit.

5. A tool head having an electrical load (50) and having a rotary transmitter (2) which is designed as claimed in one of claims 1 to 4, **characterized in that** the electrical load (50) is in the form of an electric motor (76), which can be connected to the secondary circuit (36), for adjusting a slide (70) and/or in the form of an actuator for cutting adjustment and/or in the form of a laser and/or in the form of an inductor and/or in the form of an electrically actuable spray unit for a quenching fluid and/or in the form of an apparatus for welding, soldering, heating, curing, coating or labeling a workpiece.

6. A method for the inductive transmission of electrical power by means of a rotary transmitter (2) from a stator part (4), which is fixed to the machine and has a primary circuit (8), to a rotor part (6), which is fixed to the tool and has a secondary circuit (36), over a power transmission section (31) in a machine tool, **characterized in that** in a first step a test resistor (51) is connected into the secondary circuit (36), **in that** in a second step a measure for the electrical load power in the primary circuit (8) or in the secondary circuit (36) is ascertained as a function of the frequency (fₚ) of an alternating current in the primary circuit (8), **in that** in a third step an optimum frequency (fₒₚₜ) of the alternating current in the primary circuit (8), at which frequency the electrical load power is at a maximum, is ascertained, and **in that** in a fourth step an operating frequency of the alternating current in the primary circuit (8) for transmitting electrical power from the stator part (4) to the rotor part (6) is set, the value of said operating frequency corresponding to the optimum frequency (fₒₚₜ).

## Revendications

1. Transformateur tournant (2) pour machines-outils, comportant une liaison de transmission d'énergie électrique par induction (31), une partie stator (4) solidaire de la machine et une partie rotor (6) solidaire de l'outil, pouvant tourner autour d'un axe de rotation (64), la partie stator (4) présentant un enroulement primaire (10) disposé dans un circuit primaire (8) et la partie rotor (6) un enroulement secondaire (38) disposé dans un circuit secondaire (36), séparé de l'enroulement primaire par un espace d'air, **caractérisé en ce qu'**un onduleur (12) est disposé dans le circuit primaire (8), dont l'entrée de courant continu (14, 16) est connectée à une source de courant continu (7, 9), dont la sortie de courant alternatif (18, 20) est connectée à un circuit oscillant primaire contenant l'enroulement primaire (10) et dont la fréquence de service est variable et réglable par un module de commande (24), qu'un redresseur (40) est disposé dans le circuit secondaire (36), à l'entrée de courant alternatif (42, 44) duquel est connecté un circuit oscillant secondaire contenant l'enroulement secondaire (38), et dont la sortie de courant continu (46, 48) est réalisée sous la forme d'une connexion de consommateur, que le circuit secondaire comprend une résistance de test (51) pouvant être mise en circuit au choix, qui court-circuite la connexion de consommateur, qu'un ampèremètre (28) est disposé dans le circuit primaire à l'entrée de courant continu (14, 16) de l'onduleur (12), et que le module de commande (24) présente une sortie de réglage (26) programmable reliée à l'entrée de fréquence (22) de l'onduleur (12) et une entrée de mesure (32) reliée ou communiquant avec l'ampèremètre (28).

2. Transformateur tournant (2) pour machines-outils, comportant une liaison de transmission d'énergie électrique par induction (31), une partie stator (4) solidaire de la machine et une partie rotor (6) solidaire de l'outil, pouvant tourner autour d'un axe de rotation (64), la partie stator (4) présentant un enroulement primaire (10) disposé dans un circuit primaire (8) et la partie rotor (6) un enroulement secondaire (38) disposé dans un circuit secondaire (36), séparé de l'enroulement primaire (10) par un espace d'air (37), **caractérisé en ce qu'**un onduleur (12) est disposé dans le circuit primaire (8), dont l'entrée de courant continu (14, 16) est connectée à une source de courant continu (7, 9), dont la sortie de courant alternatif (18, 20) est connectée à un circuit oscillant primaire contenant l'enroulement primaire (10) et dont la fréquence de service est variable et réglable par un module de commande (24), qu'un redresseur (40) est disposé dans le circuit secondaire (36), à l'entrée de courant alternatif (42, 44) duquel est connecté un circuit oscillant secondaire contenant l'enroulement secondaire (38), et dont la sortie de courant continu (46, 48) est réalisée sous la forme d'une connexion de consommateur, que le circuit secondaire comprend une résistance de test (51) pouvant être mise en circuit au choix, qui court-circuite la connexion de consommateur, qu'un voltmètre (102) qui mesure la chute de tension sur la résistance de test (51) est disposé dans le circuit secondaire, et que le module de commande (24) présente une sortie de réglage (26) programmable reliée à l'entrée de fréquence (22) de l'onduleur (12) et une entrée de mesure (39) communiquant sans fil avec le voltmètre (102).

3. Transformateur tournant selon la revendication 1 ou 2, **caractérisé en ce que** le module de commande (24) présente un circuit ou une routine d'évaluation pour enregistrer et/ou évaluer les valeurs de mesure reçues par l'entrée de mesure (32) sous la forme de signaux de mesure en fonction des valeurs de fréquence délivrées par la sortie de réglage (26) sous la forme de signaux de fréquence lorsque la résistance de test (51) est en circuit, ainsi qu'une mémoire de données pour stocker une fréquence de service optimale calculée avec le circuit ou la routine d'évaluation.

4. Transformateur tournant selon l'une des revendications 1 à 3, **caractérisé en ce que** le module de commande (24) règle la fréquence du courant alternatif délivré par l'onduleur (12) à une fréquence de service proche de la fréquence de résonance du circuit oscillant secondaire.

5. Tête d'outil comprenant un consommateur électrique (50) et un transformateur tournant (2) réalisé selon l'une des revendications 1 à 4, **caractérisée en ce que** le consommateur électrique (50) est réalisé sous la forme d'un moteur électrique (76) pouvant être connecté au circuit secondaire (36) pour le déplacement d'un coulisseau (70) et/ou sous la forme d'un actionneur pour le réglage du tranchant et/ou sous la forme d'un laser et/ou sous la forme d'un inducteur et/ou sous la forme d'un groupe de pulvérisation à commande électrique pour un fluide de trempe et/ou sous la forme d'un dispositif pour souder, braser, chauffer, durcir, enduire ou marquer une pièce.

6. Procédé de transmission d'énergie électrique par induction au moyen d'un transformateur tournant (2) d'une partie stator (4) solidaire de la machine, présentant un circuit primaire (8), dans une partie rotor (6) solidaire de l'outil présentant un circuit secondaire (36) par une ligne de transmission d'énergie (31) dans une machine-outil, **caractérisé en ce que**, dans une première étape, une résistance de test (51) est couplée dans le circuit secondaire (36), que, dans une deuxième étape, une grandeur de la puissance de consommation électrique dans le circuit primaire (8) ou dans le circuit secondaire (36) en fonction de la fréquence (fp) d'un courant alternatif dans le circuit primaire (8) est déterminée, que, dans une troisième étape, une fréquence optimale (fₒₚₜ) du courant alternatif dans le circuit primaire (8), à laquelle la puissance de consommation électrique est maximale, est déterminée et que, dans une quatrième étape, une fréquence de service du courant alternatif dans le circuit primaire (8) pour la transmission d'énergie électrique de la partie stator (4) dans la partie rotor (6), dont la valeur correspond à la fréquence optimale (fₒₚₜ), est réglée.
